# EUROPEAN PATENT APPLICATION

(11) **EP 4 641 210 A1**
(43) Date of publication of application: **29.10.2025**
(21) Application number: 25170385.6
(22) Date of filing: 14.04.2025
(51) Int. Cl.: G01N 35/00

(54) **ANALYSIS SYSTEM AND ANALYSIS APPARATUS**

(30) Priority: 22.04.2024 JP 2024069063
(71) Applicant: SHIMADZU CORPORATION, Kyoto-shi, Kyoto 604-8511 (JP)
(72) Inventor: YOSHIZAKO, Mitsutomo, Kyoto-shi, Kyoto, 604-8511 (JP); HOSHINO, Shogo, Kyoto-shi, Kyoto, 604-8511 (JP)
(74) Representative: Müller-Boré & Partner Patentanwälte PartG mbB

(57) **Abstract**

An analysis system (1) includes an analysis apparatus (100) including an element to be used for an analysis operation. The analysis system (1) includes a terminal apparatus (200) that shows information on the analysis operation by the analysis apparatus (100). In the analysis system (1), the terminal apparatus (200) is configured separately from the analysis apparatus (100). The analysis apparatus (100) includes a holding portion (123, 124, 125) for holding the terminal apparatus (200).

## Description

### CROSS REFERENCE TO RELATED APPLICATIONS

This nonprovisional application is based on Japanese Patent Application No. 2024-069063 filed with the Japan Patent Office on April 22, 2024, the entire contents of which are hereby incorporated by reference.

### BACKGROUND OF THE INVENTION

### Field of the Invention

The present disclosure relates to an analysis system and an analysis apparatus.

### Description of the Background Art

Various analysis apparatuses have conventionally been provided with a display portion that shows various types of information on analysis. For example, Japanese Patent Laying-Open No. 2023-124605 discloses a preparative liquid chromatographic apparatus including a display portion that shows a result of analysis. In analysis using an analysis apparatus, an operator needs various types of information. For example, Japanese Patent Laying-Open No. 2020-038199 discloses an analysis manual prepared as a paper document or text data, as information to be referred to by an operator in chromatographic analysis using a chromatographic apparatus.

An operator may desire to refer to information shown on a display portion at a location distant from an analysis apparatus. For example, the operator may desire to share a result of analysis with others in various situations. In order to address such situations, in an analysis system, a conventional display portion is preferably configured as a display apparatus separate from a main body of the analysis apparatus.

The operator, on the other hand, may desire to refer to information shown on the display portion in the vicinity of the analysis apparatus. For example, the operator may desire to immediately refer to the result of analysis while the operator monitors operations of the analysis apparatus in the vicinity of the analysis apparatus. In this case, with the display apparatus being configured simply as being separate from the main body of the analysis apparatus, occurrence of a dangerous event is assumed. More specifically, containers of various agents may be arranged around the analysis apparatus and there is a concern about occurrence of such an event that the display apparatus placed between the containers of the agents causes toppling of the containers.

Under such circumstances, a technique for safely showing information on analysis in an analysis system has been demanded.

### SUMMARY OF THE INVENTION

An analysis system according to one aspect of the present disclosure includes an analysis apparatus including an element to be used for an analysis operation and a display apparatus that shows information on the analysis operation. The display apparatus is configured separately from the analysis apparatus. The analysis apparatus includes a holding portion for holding the display apparatus.

An analysis apparatus according to one aspect of the present disclosure is an analysis apparatus including an element to be used for an analysis operation. The analysis apparatus includes a communication portion that communicates with a display apparatus that shows information on the analysis operation. The analysis apparatus is configured separately from the display apparatus. The analysis apparatus includes a holding portion for holding the display apparatus.

The foregoing and other objects, features, aspects, and advantages of this invention will become more apparent from the following detailed description of this invention when taken in conjunction with the accompanying drawings.

### BRIEF DESCRIPTION OF THE DRAWINGS

Figs. 1 to 6 are each a diagram showing an appearance of an analysis system 1 according to one embodiment of the present disclosure.
Fig. 7 is a diagram showing a hardware configuration of analysis system 1.
Fig. 8 is a diagram showing a first modification of analysis system 1.
Fig. 9 is a diagram showing a second modification of analysis system 1.

### DESCRIPTION OF THE PREFERRED EMBODIMENTS

An embodiment of the present disclosure will be described in detail below with reference to the drawings. The same or corresponding elements in the drawings have the same reference characters allotted and description thereof will not be repeated.

### [Configuration of Analysis System]

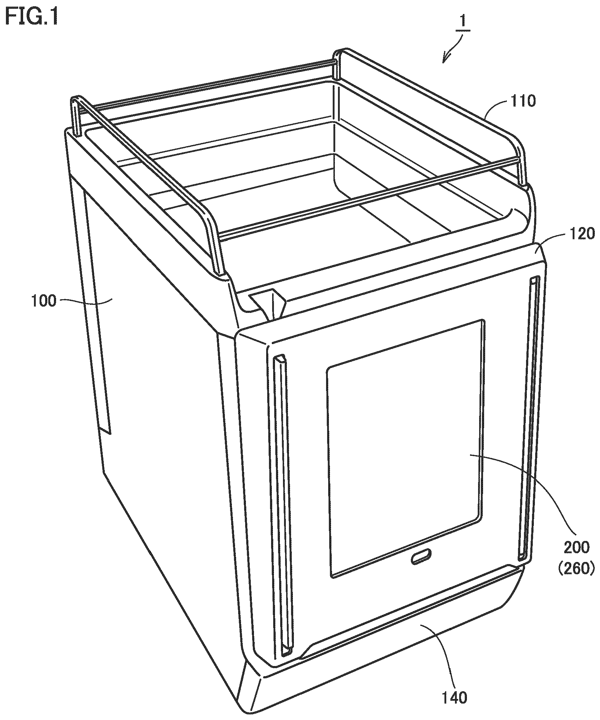

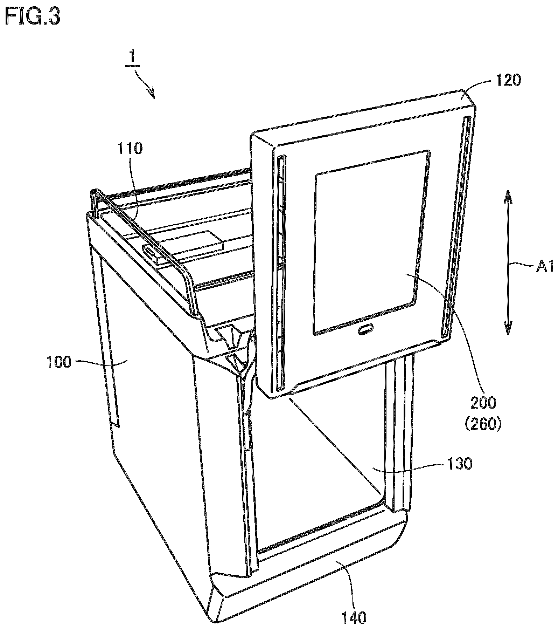

Each of Figs. 1 to 6 is a diagram showing an appearance of an analysis system 1 according to one embodiment of the present disclosure. Analysis system 1 includes an analysis apparatus 100 and a terminal apparatus 200 that can communicate with analysis apparatus 100.

As mainly shown in Fig. 1, analysis system 1 includes analysis apparatus 100. Analysis apparatus 100 is provided with a protection frame 110 at its upper surface, provided with a door 120 at its front surface, and a drawer 140 at its lower portion. Such an element as a container of a solvent or the like can be accommodated in drawer 140.

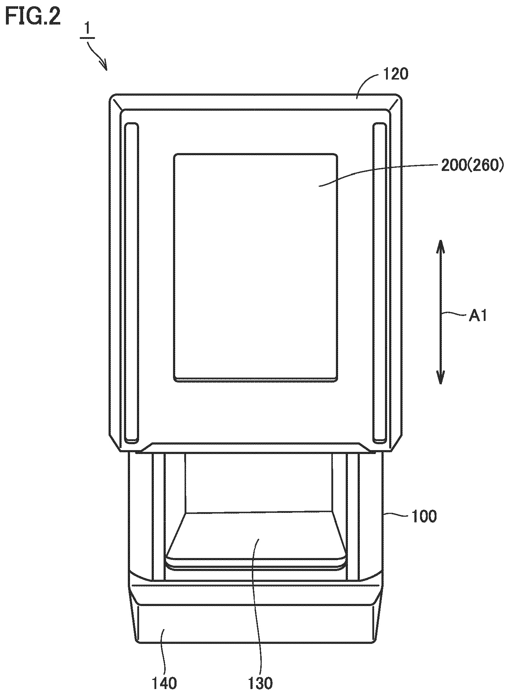

As mainly shown in Figs. 2, 3, and 6, door 120 is configured to slide in a vertical direction (a direction shown with a double-headed arrow A1). As door 120 slides, it opens and closes an opening of an accommodation portion 130. Door 120 is an exemplary shield member that covers the opening of accommodation portion 130. A direction of slide of door 120 is the vertical direction. Therefore, even when another apparatus is provided at a side of analysis apparatus 100, door 120 can open and close the opening without blocking an operation on another apparatus. An element to be used for an analysis operation by analysis apparatus 100 is accommodated in accommodation portion 130, although Figs. 2, 3, and 6 does not show the same for the sake of convenience of illustration.

An exemplary analysis apparatus 100 is a liquid chromatograph. The exemplary element is a pump that supplies a solvent (mobile phase) to an analysis flow path. Another exemplary element is an autosampler that injects a sample into the analysis flow path. Yet another exemplary element is a column oven that adjusts a temperature of a column. Still another exemplary element is a detector (an ultraviolet-visible spectrophotometer, a spectrofluorometer, or the like) that detects at least one component separated from a sample in a column.

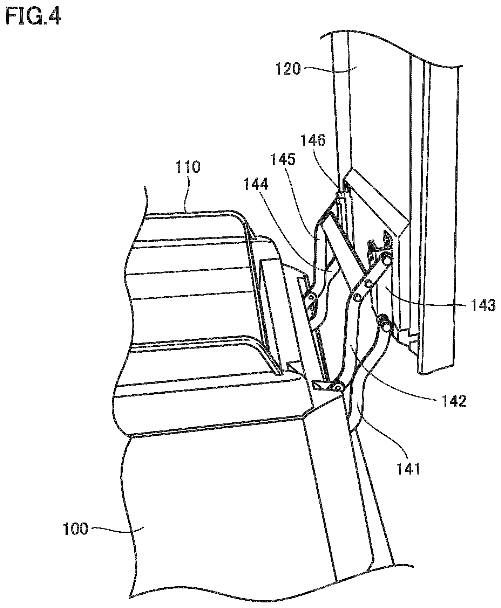

As mainly shown in Fig. 4, analysis apparatus 100 includes a link mechanism that slides door 120 in the vertical direction. The link mechanism includes arms 141, 142, 144, and 145 and bases 143 and 146. Each of arms 141 and 142 has one end coupled to base 143. Each of arms 141 and 142 has the other end coupled to a frame of accommodation portion 130. Each of arms 144 and 145 has one end coupled to base 146. Each of arms 144 and 145 has the other end coupled to the frame of accommodation portion 130.

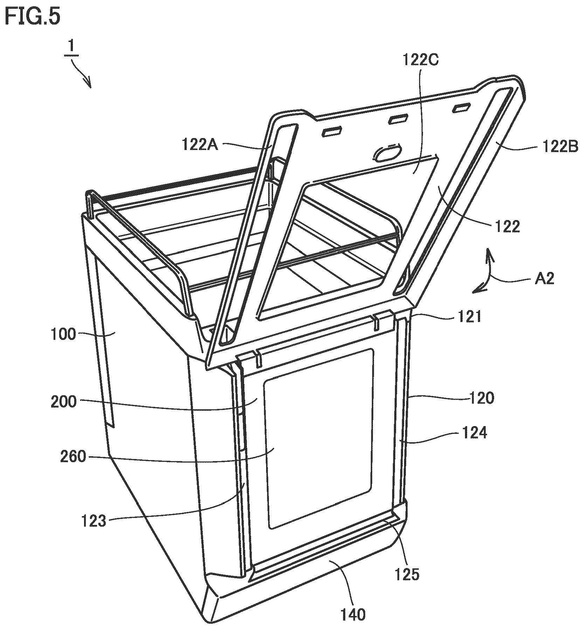

As mainly shown in Fig. 5, door 120 includes a main body 121 and a cover 122. Cover 122 opens and closes a front surface of main body 121 by pivotally moving in a direction shown with a double-headed arrow A2. Cover 122 is provided with a handle 122A at a left end and a handle 122B at a right end. The operator can pivotally move cover 122 by holding handles 122A and 122B. A window 122C is arranged between handle 122A and handle 122B.

Main body 121 includes projections 123, 124, and 125. In a state shown in Fig. 5 (a state in which door 120 closes the opening of accommodation portion 130), projections 123 and 124 extend in the vertical direction and projection 125 extends in a horizontal direction. Projections 123, 124, and 125 at door 120 hold terminal apparatus 200. An exemplary terminal apparatus 200 is a tablet terminal.

In one implementation, a size of window 122C is equal to or smaller than a size of an outer edge of terminal apparatus 200. In other words, window 122C may allow visual recognition of the entire terminal apparatus 200 from the outside by being identical in shape to the outer edge of terminal apparatus 200 or may cover a part of terminal apparatus 200. Window 122C may be, for example, a transparent sheet. Terminal apparatus 200 is thus externally visually recognizable, and attachment of a reagent to terminal apparatus 200 can be avoided. Instead of window 122C, a hole may be provided in cover 122. In other words, a portion corresponding to window 122C may be a cavity. The operator can thus visually recognize representation on a display 260 of terminal apparatus 200 from the outside of cover 122 while cover 122 covers the front surface of main body 121.

In analysis system 1, terminal apparatus 200 should only visually be recognizable from the outside of cover 122 through window 122C. In other words, an outer edge of window 122C may have a size equal to or larger than the outer edge of terminal apparatus 200. In an example where a hole is provided instead of window 122C, terminal apparatus 200 may be held at door 120 by being fitted in the hole. In this case, terminal apparatus 200 is held by the hole provided in door 120 (cover 122).

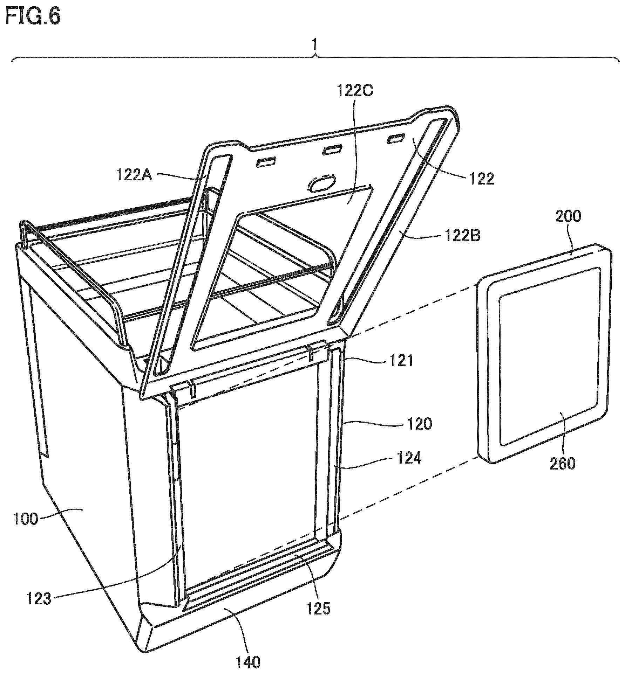

As mainly shown in Fig. 6, terminal apparatus 200 is attachable to and removable from analysis apparatus 100. The operator can thus use terminal apparatus 200 at a location distant from analysis apparatus 100.

### [Hardware Configuration of Analysis System]

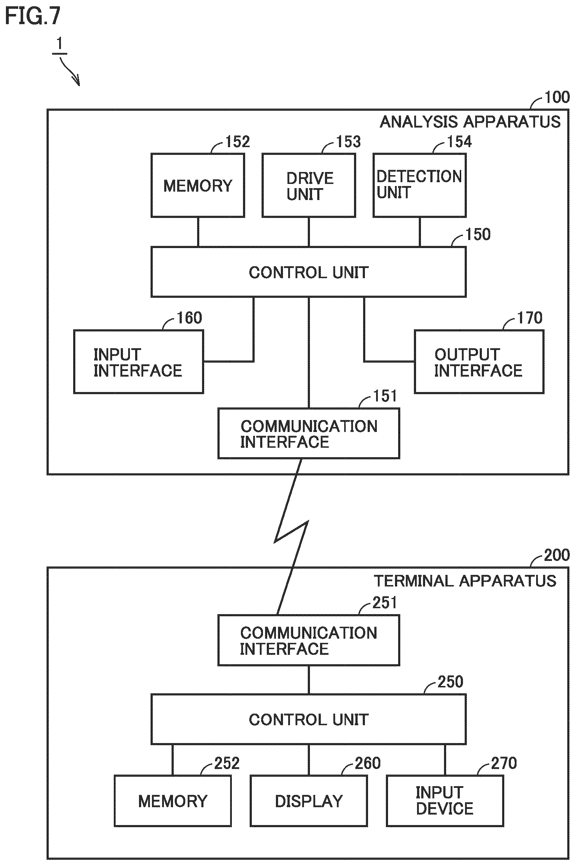

Fig. 7 is a diagram showing a hardware configuration of analysis system 1. A hardware configuration of each of analysis apparatus 100 and terminal apparatus 200 will be described with reference to Fig. 7.

### (Analysis Apparatus 100)

Analysis apparatus 100 includes a control unit 150, a communication interface 151, a memory 152, a drive unit 153, a detection unit 154, an output interface 160, and an input interface 170.

Control unit 150 is implemented, for example, by at least one processor, and performs computation for control of operations of analysis apparatus 100. Communication interface 151 is implemented, for example, by a network card, and functions as an interface for communication between analysis apparatus 100 and terminal apparatus 200. A program and/or data for the computation is/are stored in memory 152 in a non-transitory manner.

Drive unit 153 includes at least one element (for example, pump) driven for an analysis operation by analysis apparatus 100. Detection unit 154 includes at least one element (for example, detector described above) that performs a detection operation associated with the analysis operation by analysis apparatus 100.

Output interface 160 is implemented, for example, by a display and/or an indicator, and outputs a result of computation by control unit 150. Input interface 170 is implemented, for example, by an operation button and/or a touch sensor, and receives an external operation.

### (Terminal Apparatus 200)

Terminal apparatus 200 includes a control unit 250, a communication interface 251, a memory 252, display 260, and an input device 270.

Control unit 250 is implemented, for example, by at least one processor, and performs computation for control of operations of terminal apparatus 200. Communication interface 251 is implemented, for example, by a network card, and functions as an interface for communication between terminal apparatus 200 and analysis apparatus 100. A program and/or data for the computation is/are stored in memory 252 in a non-transitory manner.

Any type of display may be adopted as display 260. For example, display 260 is a thin film transistor (TFR) liquid crystal display or an organic electro luminescence (EL) display. Display 260 may be an electronic paper display. A size of display 260 is not particularly restricted, and a display, for example, of an A4 size (210 mm × 297 mm) may be adopted.

Input device 270 is implemented, for example, by an operation button and/or a touch sensor, and receives an external operation.

### [Coordination Between Analysis Apparatus and Terminal Apparatus in Analysis System]

Analysis apparatus 100 performs the analysis operation in accordance with an instruction inputted to input interface 170. Analysis apparatus 100 performs the analysis operation in accordance with the instruction inputted through communication interface 151. In other words, analysis apparatus 100 may perform the analysis operation in accordance with the instruction inputted from terminal apparatus 200. The operator can thus have analysis apparatus 100 perform the analysis operation by operating input device 270 of terminal apparatus 200.

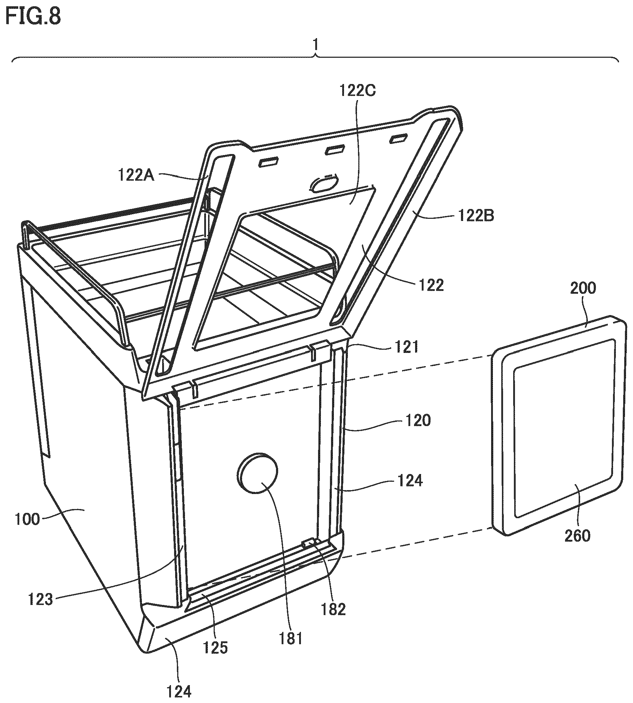

Fig. 8 is a diagram showing a first modification of analysis system 1. In an example in Fig. 8, analysis apparatus 100 further includes a charging pad 181 and a switch 182 in main body 121 of door 120.

As terminal apparatus 200 is held by projections 123, 124, and 125 (set at door 120) as shown in Fig. 5, it pushes switch 182 to the inside of projection 124. Analysis apparatus 100 further includes a sensor that detects whether switch 182 has not been pushed to the inside of projection 124 (Fig. 8) or has been pushed to the inside of projection 124 (Fig. 5). Switch 182 and the sensor implement an exemplary detection member that detects that the display apparatus is being held by the holding portion.

Control unit 150 of analysis apparatus 100 may control analysis apparatus 100 to perform the analysis operation (to have drive unit 153 operate for the analysis operation) in accordance with the instruction from terminal apparatus 200, on condition that switch 182 has been pushed to the inside of projection 124. For example, when control unit 150 receives the instruction from terminal apparatus 200, upon detection by the sensor of pushing of switch 182 to the inside of projection 124, the control unit has drive unit 153 operate in accordance with the instruction, and upon detection by the sensor of absence of pushing of switch 182 to the inside of projection 124, the control unit ignores the instruction. The operator is thus permitted to transmit the instruction for the analysis operation to analysis apparatus 100 through terminal apparatus 200 on condition that terminal apparatus 200 has been set at door 120, and such an event that analysis apparatus 100 becomes unable to operate due to contradictory instructions from a plurality of terminal apparatuses can be avoided.

Control unit 150 of analysis apparatus 100 can transmit information on the analysis operation to terminal apparatus 200 through communication interface 151. The information on the analysis operation may include information that identifies the operator who has outputted the instruction for the analysis operation, setting about operations of drive unit 153, and a result of detection by detection unit 154.

Control unit 250 of terminal apparatus 200 has display 260 show the information on the analysis operation received from analysis apparatus 100 and information received from an apparatus other than analysis apparatus 100.

In other words, in analysis system 1, the information on the analysis operation by analysis apparatus 100 is shown on terminal apparatus 200 configured separately from analysis apparatus 100, and analysis apparatus 100 includes the holding portion (projections 123, 124, and 125, the hole provided in cover 122, or the like) for holding terminal apparatus 200. The operator can thus refer to the information on the analysis operation at a location distant from analysis apparatus 100 and in the vicinity of analysis apparatus 100, and occurrence of such an event that terminal apparatus 200 causes toppling of a container arranged in the vicinity of analysis apparatus 100 is suppressed.

In an example where display 260 is implemented by the electronic paper display, even while power of terminal apparatus 200 is off, display 260 can keep showing the information on the analysis operation. For example, when control unit 250 receives a notification about shortage of a specific consumable from analysis apparatus 100, it has display 260 show the notification. In the example where display 260 is implemented by the electronic paper display, even while power of terminal apparatus 200 is off afterwards, display 260 can keep showing the notification about shortage of the specific consumable. When one operator inputs a message directed to another operator to input device 270, control unit 250 has display 260 show the message. In the example where display 260 is implemented by the electronic paper display, even while power of terminal apparatus 200 is off afterwards, display 260 can keep showing the message.

Analysis apparatus 100 may include a mechanism that receives supply of electric power from a wall outlet and wirelessly charges terminal apparatus 200. The mechanism includes charging pad 181. As terminal apparatus 200 is set at door 120, power is fed from analysis apparatus 100 to terminal apparatus 200 through charging pad 181. Wireless charging of terminal apparatus 200 is thus realized.

As mainly shown in Fig. 1, as the outer edge of terminal apparatus 200 is covered with cover 122, feeling of unity between analysis apparatus 100 and terminal apparatus 200 is produced. A third party is thus less likely to assume that terminal apparatus 200 is separate from analysis apparatus 100, that is, terminal apparatus 200 is configured as being removable from analysis apparatus 100. Therefore, the third party is less likely to conceive carrying away of terminal apparatus 200 and possibility of theft of terminal apparatus 200 is lowered.

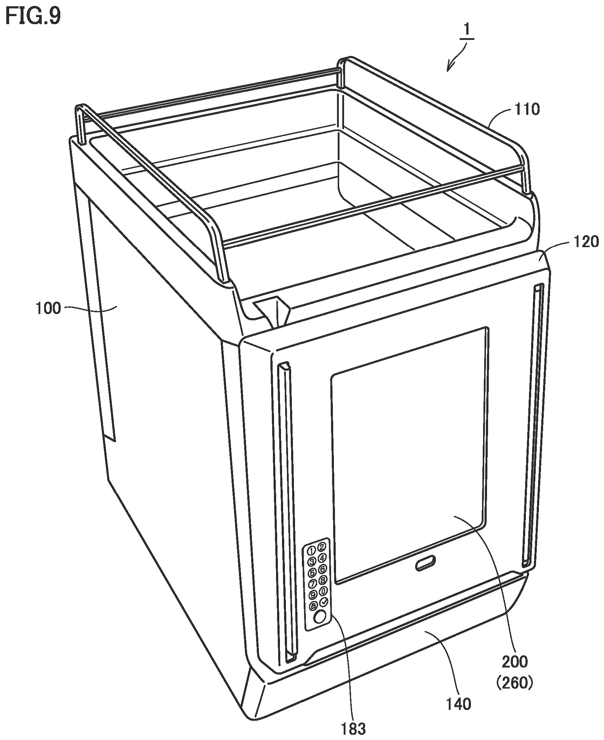

Fig. 9 is a diagram showing a second modification of analysis system 1. In an example in Fig. 9, cover 122 is provided with an electronic lock 183 for restriction of opening and closing of cover 122. Only a specific operator is notified of a code number of electronic lock 183. With electronic lock 183, carrying away of terminal apparatus 200 can more reliably be avoided. Electronic lock 183 is an exemplary lock mechanism that restricts cancellation of a state of cover of terminal apparatus 200 with the cover. The lock mechanism may be implemented in another manner, and may be implemented, for example, by a key and a cylinder with a keyhole.

### [Aspects]

Illustrative embodiments described above are understood by a person skilled in the art as specific examples of aspects below.

(Clause 1) An analysis system according to one aspect includes an analysis apparatus including an element to be used for an analysis operation and a display apparatus that shows information on the analysis operation. The display apparatus may be configured separately from the analysis apparatus. The analysis apparatus may include a holding portion for holding the display apparatus.

According to the analysis system described in Clause 1, a technique for safely showing information on analysis in the analysis system is provided.

(Clause 2) In the analysis system described in Clause 1, the analysis apparatus may include an accommodation portion where the element is accommodated and a shield member that covers an opening of the accommodation portion. The holding portion may be formed at the shield member.

According to the analysis system described in Clause 2, a member for holding the display apparatus serves also as a member that covers the opening of the accommodation portion, and the number of components in the analysis apparatus can be reduced.

(Clause 3) In the analysis system described in Clause 2, the analysis apparatus may include a link mechanism that opens and closes the accommodation portion by moving the shield member in a vertical direction.

According to the analysis system described in Clause 3, even when another device is arranged at the side of the analysis apparatus, the shield member can open and close the accommodation portion without overlapping with another device.

(Clause 4) In the analysis system described in any one of Clauses 1 to 3, the analysis apparatus may include a cover that covers at least a part of the display apparatus which is being held by the holding portion.

According to the analysis system described in Clause 4, the display apparatus can more reliably be held by the cover.

(Clause 5) In the analysis system described in Clause 4, the cover may cover an outer edge of the display apparatus.

According to the analysis system described in Clause 5, feeling of unity between the analysis apparatus and the display apparatus is produced and carrying away of the display apparatus can be suppressed.

(Clause 6) In the analysis system described in Clause 5, the cover may be provided with a hole having an area equal to or smaller than an area of the outer edge of the display apparatus.

According to the analysis system described in Clause 6, the display apparatus is externally visually recognizable.

(Clause 7) In the analysis system described in Clause 5, the cover may be provided with a window having an area equal to or smaller than an area of the outer edge of the display apparatus.

According to the analysis system described in Clause 7, the display apparatus is externally visually recognizable and attachment of a reagent to the display apparatus can be avoided.

(Clause 8) In the analysis system described in any one of Clauses 4 to 7, the analysis apparatus may include a lock mechanism that restricts cancellation of a state of cover of the display apparatus with the cover.

According to the analysis system described in Clause 8, carrying away of the display apparatus can more reliably be avoided.

(Clause 9) In the analysis system described in any one of Clauses 1 to 8, the display apparatus may include an input device that receives input of an instruction for the analysis apparatus and a first communication interface that transmits the instruction to the analysis apparatus in response to input of the instruction to the input device. The analysis apparatus may include a second communication interface that communicates with the first communication interface, a sensor that detects holding of the display apparatus by the holding portion, and a control unit that controls the element. The control unit may have the element operate in accordance with the instruction on condition that the sensor detects that the display apparatus is held by the holding portion.

According to the analysis system described in Clause 9, such an event that the analysis apparatus becomes unable to operate due to contradictory instructions from a plurality of display apparatuses can be avoided.

(Clause 10) In the analysis system described in any one of Clauses 1 to 9, the analysis apparatus may include a charging unit for supply of electric power to the display apparatus which is being held by the holding portion.

According to the analysis system described in Clause 10, when the display apparatus is used together with the analysis apparatus, charging of the display apparatus can be performed, and thus convenience of the display apparatus can be improved.

(Clause 11) In the analysis system described in any one of Clauses 1 to 10, the display apparatus may include a display of an A4 size.

According to the analysis system described in Clause 11, the display apparatus can show a sufficient amount of information and has a size that allows easy conveyance thereof by an operator.

(Clause 12) In the analysis system described in Clause 1, the display apparatus may include an electronic paper display.

According to the analysis system described in Clause 12, information on the analysis operation by the analysis apparatus can be shown even while power of the display apparatus is off.

(Clause 13) An analysis apparatus according to one aspect is an analysis apparatus including an element to be used for an analysis operation. The analysis apparatus may include a communication portion that communicates with a display apparatus that shows information on the analysis operation. The analysis apparatus may be configured separately from the display apparatus. The analysis apparatus may include a holding portion for holding the display apparatus.

According to the analysis apparatus described in Clause 13, a technique for safely showing information on analysis in an analysis system including the analysis apparatus is provided.

(Clause 14) The analysis apparatus described in Clause 13 may include an accommodation portion where the element is accommodated and a shield member that covers an opening of the accommodation portion. The holding portion may be formed at the shield member.

According to the analysis apparatus described in Clause 14, a member for holding the display apparatus serves also as a member that covers the opening of the accommodation portion, and the number of components in the analysis apparatus can be reduced.

(Clause 15) The analysis apparatus described in Clause 14 may include a link mechanism that opens and closes the accommodation portion by moving the shield member in a vertical direction.

According to the analysis apparatus described in Clause 14, even when another device is provided at the side of the analysis apparatus, the shield member can open and close the accommodation portion without overlapping with another device.

(Clause 16) The analysis apparatus described in any one of Clauses 13 to 15 may include a cover that covers at least a part of the display apparatus which is being held by the holding portion.

According to the analysis apparatus described in Clause 16, the display apparatus can more reliably be held by the cover.

(Clause 17) In the analysis apparatus described in Clause 16, the cover may cover an outer edge of the display apparatus.

According to the analysis apparatus described in Clause 17, feeling of unity between the analysis apparatus and the display apparatus is produced and carrying away of the display apparatus can be suppressed.

(Clause 18) **In** the analysis apparatus described in Clause 17, the cover may be provided with a hole having an area equal to or smaller than an area of the outer edge of the display apparatus.

According to the analysis apparatus described in Clause 18, the display apparatus is externally visually recognizable.

(Clause 19) **In** the analysis apparatus described in Clause 17, the cover may be provided with a window having an area equal to or smaller than an area of the outer edge of the display apparatus.

According to the analysis apparatus described in Clause 19, the display apparatus is externally visually recognizable and attachment of a reagent to the display apparatus can be avoided.

(Clause 20) The analysis apparatus described in any one of Clauses 16 to 19 may include a lock mechanism that restricts cancellation of a state of cover of the display apparatus with the cover.

According to the analysis apparatus described in Clause 20, carrying away of the display apparatus can more reliably be avoided.

(Clause 21) The analysis apparatus described in any one of Clauses 13 to 20 may include a communication interface that communicates with the display apparatus, a detection member that detects holding of the display apparatus by the holding portion, and a control unit that controls the element. The control unit may have the element operate in accordance with a signal from the display apparatus on condition that the detection member detects that the display apparatus is held by the holding portion.

According to the analysis apparatus described in Clause 21, such an event that the analysis apparatus becomes unable to operate due to contradictory instructions from a plurality of display apparatuses can be avoided.

(Clause 22) The analysis apparatus described in any one of Clauses 13 to 21 may include a charging unit for supply of electric power to the display apparatus which is being held by the holding portion.

According to the analysis apparatus described in Clause 22, when the display apparatus is used together with the analysis apparatus, charging of the display apparatus can be performed, and thus convenience of the display apparatus can be improved.

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. An analysis system (1) comprising:
an analysis apparatus (100) including an element to be used for an analysis operation; and
a display apparatus (200) that shows information on the analysis operation, wherein
the display apparatus (200) is configured separately from the analysis apparatus, and
the analysis apparatus (100) includes a holding portion (123, 124, 125) for holding the display apparatus (200).

2. The analysis system (1) according to claim 1, wherein
the analysis apparatus (100) includes
an accommodation portion (130) where the element is accommodated, and
a shield member (120) that covers an opening of the accommodation portion, and
the holding portion (123, 124, 125) is formed at the shield member.

3. The analysis system (1) according to claim 2, wherein
the analysis apparatus (100) includes a link mechanism (141 to 146) that opens and closes the accommodation portion by moving the shield member in a vertical direction.

4. The analysis system (1) according to any one of claims 1 to 3, wherein
the analysis apparatus includes a cover (122) that covers at least a part of the display apparatus which is being held by the holding portion.

5. The analysis system (1) according to claim 4, wherein
the cover (122) covers an outer edge of the display apparatus (200).

6. The analysis system (1) according to claim 5, wherein
the cover (122) is provided with a hole having an area equal to or smaller than an area of the outer edge of the display apparatus.

7. The analysis system (1) according to claim 5, wherein
the cover (122) is provided with a window (122C) having an area equal to or smaller than an area of the outer edge of the display apparatus.

8. The analysis system (1) according to any one of claims 4 to 7, wherein
the analysis apparatus (100) includes a lock mechanism (183) that restricts cancellation of a state of cover of the display apparatus (200) with the cover (122).

9. The analysis system (1) according to any of the preceding claims, wherein
the display apparatus (200) includes
an input device (270) that receives input of an instruction for the analysis apparatus, and
a first communication interface (251) that transmits the instruction to the analysis apparatus in response to input of the instruction to the input device,
the analysis apparatus (100) includes
a second communication interface (151) that communicates with the first communication interface,
a sensor that detects holding of the display apparatus by the holding portion, and
a control unit (150) that controls the element, and
the control unit (150) has the element operate in accordance with the instruction on condition that the sensor detects that the display apparatus (200) is held by the holding portion (123, 124, 125).

10. The analysis system (1) according to any one of the preceding claims, wherein
the analysis apparatus (100) includes a charging unit (181) for supply of electric power to the display apparatus (200) which is being held by the holding portion.

11. The analysis system (1) according to any one of the preceding claims,
wherein
the display apparatus (200) includes a display of an A4 size.

12. The analysis system (1) according to any one of the preceding claims,
wherein
the display apparatus (200) includes an electronic paper display.
